(19) Europäisches Patentamt
European Patent Office
Office européen des brevets

(11) Publication number: **0 272 417**
**A2**

(12) **EUROPEAN PATENT APPLICATION**

(21) Application number: 87116330.9

(22) Date of filing: 05.11.87

(51) Int. Cl.[4]: C08L 69/00 , C08L 67/02 , C08K 5/05

(30) Priority: 22.12.86 US 944037

(43) Date of publication of application: 29.06.88 Bulletin 88/26

(84) Designated Contracting States: DE FR GB IT NL

(71) Applicant: GENERAL ELECTRIC COMPANY
1 River Road
Schenectady New York 12305(US)

(72) Inventor: Nelson, Linda Harmon
720 Drexel Drive
Evansville Indiana 47712(US)

(74) Representative: Catherine, Alain et al
General Electric France Service de Propriété Industrielle 18 Rue Horace Vernet B.P. 76
F-92134 Issy-les-Moulineaux Cedex(FR)

(54) **Blends of polycarbonate resins and polyester resins exhibiting improved color properties.**

(57) A resinous composition comprising:
(i) at least one aromatic polycarbonate resin;
(ii) at least one polyester resin; and
(iii) a minor amount of at least one polyol.

EP 0 272 417 A2

# BLENDS OF POLYCARBONATE RESINS AND POLYESTER RESINS EXHIBITING IMPROVED COLOR PROPERTIES

## BACKGROUND OF THE INVENTION

Blends of polycarbonate resins and polyester resins are known in the art. For example U.S. Pat. No. 3,218,372 discloses blends of polycarbonates and polyalkylene terephthalates; and U.S. Pat. No. 4,125, 572 discloses blends of polycarbonates, poly(1,4-butylene terephthalate) and a copolyester of an aliphatic or cycloaliphatic diol and a mixture of terephthalic and isophthalic acids. Polycarbonate/polyester blends exhibit excellent properties which render them useful as films, fibers, and molded articles. They exhibit, for example, better ductility than neat polyesters and better processability than neat polycarbonates. Some of these blends, however, have a tendency to discolor or yellow. It would be very advantageous if the polycarbonate/polyester blends which tend to yellow could be provided which possessed improved color properties, i.e., reduce yellowing.

It has now been discovered that yellowing in polycarbonate/polyester blends which normally tend to yellow can be reduced by adding to said blends a minor amount of a polyol compound.

## SUMMARY OF THE INVENTION

The instant invention is directed to resinous compositions comprising a major portion of at least one polycarbonate and at least one polyester and a minor portion of at least one polyol. The polyol acts as a color stabilizer in those blends that tend to discolor or yellow and is present, in those blends, in an antiyellowing effective amount.

## DESCRIPTION OF THE INVENTION

It has been discovered that color formation such as yellowing in blends of aromatic polycarbonate and polyester resins which have a tendency to yellow or discolor can be reduced or inhibited by the incorporation in these blends of at least one polyol compound of the type described hereinafter. These polyols acts to inhibit or reduce yellowing in those polycarbonate/ polyester containing compositions in which color formation is a problem. That is to say, these polyols act as color stabilizers or anti-yellowing agents in these blends.

However, it is to be understood that these polyols can be added to those polycarbonate/polyester blends wherein color formation is not a significant problem.

The polyols are added to the blends of polycarbonate and polyester resins in relatively minor or small amounts.

This inhibition or reduction of yellowing by the polyol color stabilizers is exhibited in blends containing a wide ratio of polycarbonate resin to polyester resin. This antiyellowing effect of the polyol is also exhibited with a wide range of polycarbonate and polyester resins.

The polycarbonate resins utilized in the instant invention are conventional well known resins which are generally commercially available or may be readily prepared by well known conventional methods. These polycarbonates, as well as methods for their preparation, are described inter alia in U.S. Patent Nos. 3,161,615, 3,220,973, 3,312,659, 3,312,660, 3,313,777, 3,666,614, and 3,939,672, all of which are incorporated herein by reference. The polycarbonate resins may be conveniently prepared by the interfacial polymerization process by the coreaction of at least one dihydric phenol with a carbonate precursor. Typically, the dihydric phenols utilized may be represented by the general formula

I. 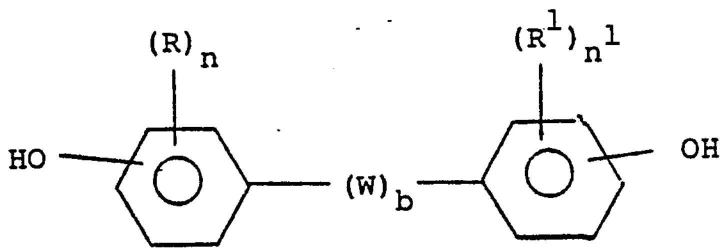

wherein:
R is independently selected from halogen, monovalent hydrocarbon, and monovalent hydrocarbonoxy radicals;
$R^1$ is independently selected from halogen, monovalent hydrocarbon, and monovalent hydrocarbonoxy radicals;
W is selected from divalent hydrocarbon radicals, -S-, -S-S-, -O-,

$$-\overset{O}{\overset{\|}{S}}-,\ -\overset{O}{\overset{\|}{\underset{\underset{O}{\|}}{S}}}-,\ \text{and}\ -\overset{O}{\overset{\|}{C}}-;$$

n and $n^1$ are independently selected from integers having a value of from 0 to 4 inclusive; and
b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The preferred cycloalkyl radicals contain from 4 to about 8 ring carbon atoms. The preferred aryl radicals contain from 6 to 12 ring carbon atoms, i.e., phenyl, biphenyl, and naphthyl. The preferred aralkyl and alkaryl radicals contain from 7 to about 14 carbon atoms.

The preferred halogen radicals represented by R and $R^1$ are chlorine and bromine.

The divalent hydrocarbon radicals represented by W include the alkylene, alkylidene, cycloalkylene and cycloalkylidene radicals. The preferred alkylene radicals are those containing from 2 to about 30 carbon atoms. The preferred alkylidene radicals are those containing from 1 to about 30 carbon atoms. The preferred cycloalkylene and cycloalkylidene radicals are those that contain from 6 to about 16 ring carbon atoms.

The monovalent hydrocarbonoxy radicals represented by R and $R^1$ may be represented by the formula -OR′ wherein R′ is a monovalent hydrocarbon radical of the type described hereinafore. Preferred monovalent hydrocarbonoxy radicals are the alkoxy and aryloxy radicals.

Some illustrative non-limiting examples of dihydric phenols of Formula 1 include:
2,2-bis(4-hydroxyphenyl) propane (bisphenol-A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl);
4,4′-thiodiphenol; and
bis(4-hydroxyphenyl)ether.

Other dihydric phenols which are useful are described in U.S. Patents 2,998,835, 3,028,365, and 3,334,154, all of which are incorporated herein by reference.

The carbonate precursor may be a carbonyl halide; a carbonate ester, or a bishaloformate. The carbonyl halides may be carbonyl bromide, carbonyl chloride, or mixtures thereof. The carbonate esters may be diphenyl carbonate; di(halophenyl)carbonates such as di(bromophenyl) carbonate, di(chlorophenyl)-carbonate, and di(tribromophenyl)carbonate; di(alkylphenyl) carbonates such as di(tolyl)carbonate; di-(naphthyl)carbonate, chlorophenyl chloronaphthyl carbonate; and phenyl tolyl carbonate. The bishaloformates that can be used include the bishaloformates of dihydric phenols such as the bischloroformates of

bipshenol-A and hydro quinone; and the bishaloformates of glycols such as the bischloroformates of ethylene glycol, neopentyl glycol, and polyethylene glycol. The preferred carbonate precursor is carbonyl chloride, also known as phosgene.

A convenient process for the preparation of the instant polycarbonates is the interfacial polymerization process. The interfacial polymerization process utilizes two different solvent media which are immiscible. One solvent medium is an aqueous basic medium. The other solvent medium is an organic medium, such as methylene chloride, which is immiscible in said aqueous medium. Also employed in the interfacial polymerization process are molecular weight regulators which control the chain length or molecular weight of the carbonate polymer by a chain terminating mechanism, and catalysts. The molecular weight regulators are well known in the art and include, but are not limited to, phenol itself, p-tertiarylbutyl phenol, and chroman I. The catalysts are also well known in the art and include, but are not limited to, tertiary amines such as triethylamine, quaternary ammonium compounds such as tetraethylammonium bromide, and quaternary phosphonium compounds such as n-butyltriphenyl phosphonium.

Also included with in the term polycarbonates are the randomly branched thermoplastic polycarbonates wherein a branching agent, which is generally a polyfunctional aromatic compound, is reacted with the dihydric phenol and the carbonate precursor. These polyfunctional aromatic compounds contain at least three functional groups which may be carboxyl, hydroxyl, carboxylic anhydride, haloformyl, and mixtures thereof. Some illustrative non-limiting examples of these aromatic polyfunctional compounds include trimellitic anhydride, trimellitic acid, trimellityl trichloride, 4-chlorofomyl phthalic anhydride, pyromellitic acid, pyromellitic dianhydride, mellitic acid, trimesic acid, and benzophenonetetracarboxylic acid.

The aromatic polycarbonates contain at least one recurring structural unit represented by the general formula

II. 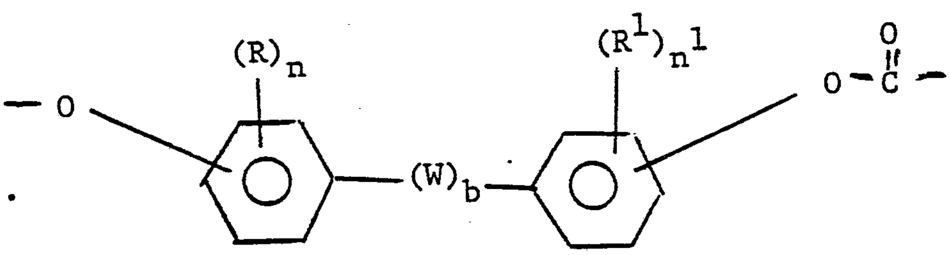

wherein R, $R^1$, W, n, $n^1$ and b are as defined hereinafore.

The polyester resins are well known in the art and are amply described, along with methods for their preparation, in the literature. They are described, inter alia, in U.S. Patent Nos. 2,485,319, 3,047,539, 3,317,464, 3,351,624, 3,498,950 and 4,066,627; and in Billmeyer, F.W., Jr., Textbook of Polymer Science, Interscience Publishers, New York, N.Y., 1962, pp. 434-436, 472-475 and 504-505, all of which are incorporated herein by reference.

The polyesters may be either aliphatic, aromatic, or aliphatic-aromatic in character. The polyesters are characterized in that they have recurring ester units in the polymer chain, i.e., carboxylate groups bonded to a carbon atom of a hydrocarbon or substituted hydrocarbon radical.

The preferred polyesters for use in the instant invention generally contain at least one recurring structural unit represented by the general formula

$$\text{III.}\quad -\!\!\left(\!- O - R^2 - O - \overset{O}{\overset{\|}{C}} - R^3 - \overset{O}{\overset{\|}{C}} -\!\right)\!\!-$$

wherein $R^2$ and $R^3$ are independently selected from divalent hydrocarbon radicals or substituted divalent hydrocarbon radicals.

In the case of aliphatic polyesters both $R^2$ and $R^3$ are independently selected from divalent aliphatic hydrocarbon radicals or substituted divalent aliphatic hydrocarbon radicals. The divalent aliphatic hydrocarbon radicals include the alkylene, alkenylene, alkylidene, cycloalkylene, cycloalkylidene, and cycloalkenylene radicals. Preferred alkylene radicals are those containing from 2 to about 20 carbon atoms. The preferred alkylidene radicals are those containing from 1 to about 20 carbon atoms. The preferred alkenylene radicals are those containing from 2 to about 20 carbon atoms. The preferred cycloalkylene, cycloalkylidene, and cycloalkenylene radicals are those containing from about 4 to about 8 ring carbon atoms. The substituted divalent aliphatic hydro carbon radicals are those divalent aliphatic hydrocarbon radicals described above which contain at least one substituent group, preferably from one to about three substituent groups. The preferred substituent groups are the halogens, nitro groups, and amino groups.

The aromatic polyesters suitable for use in the instant invention generally contain at least one recurring

structural unit of Formula III wherein $R^2$ and $R^3$ are independently selected from divalent aromatic radicals or substitueed divalent aromatic radicals. The divalent aromatic radicals represented by $R^2$ and $R^3$ include the phenylene radical, the substituted phenylene radical, the biphenylene radical, the substituted biphenylene radical, the naphthylene radical, the substituted naphthylene radical, and radicals represented by the general formula

IIIa. 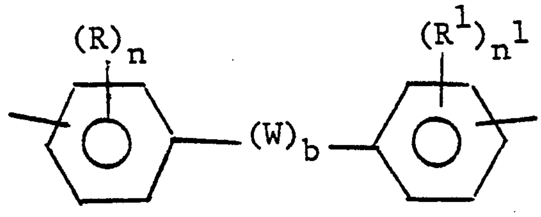

wherein R, $R^1$, W, n, $n^1$ and b are as defined hereinafore.

Particularly useful aromatic polyesters are those wherein $R^3$ is a phenylene radical and $R^2$ is a radical represented by Formula IIIa.

The aliphatic aromatic polyesters are those wherein one of $R^2$ or $R^3$ is a divalent aromatic radical and one of $R^2$ or $R^3$ is a divalent aliphatic radical. Preferred aliphatic aromatic polyesters are those wherein $R^2$ is a divalent aliphatic radical or substituted divalent aliphatic radical and $R^3$ is a divalent aromatic radical or a substituted divalent aromatic radical.

One class of particularly useful aliphatic aromatic polyesters are the polyalkylene terephthalates or polyalkylene isophthalates. These types of polyesters contain at least one recurring structural unit represented by the general formula

IIIb. 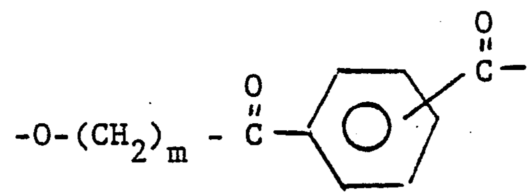

wherein m is a whole number having a value of from 2 to 4 inclusive. Especially preferred polyesters of Formula IIIb are polyethylene terephthalate and poly(1,4-butylene terephthalate).

Another class of particularly useful aliphatic aromatic polyesters are polyester copolymers or copolyesters which can, without limitation, comprise the reaction products of: (a) a glycol portion comprising a 1,4-cyclohexanedimethanol with an acid portion comprising terephthalic acid, isophthalic acid, or mixtures thereof; or (b) a glycol portion comprising a 1,4-cyclohexanedimethanol and ethylene glycol wherein the molar ratio of the 1,4-cyclohexanedimethanol to the ethylene glycol in the glycol portion is from about 4:1 to about 1:4, with an acid portion comprising terephthalic acid, isophthalic acid, or mixtures thereof.

These types of copolyesters may be prepared by procedures well known in the art, such as by conden sation reactions substantially as shown and described in U.S. Patent 2,901,466, which is hereby incorporated herein by reference. More particularly, the acid or mixtures of acids or alkyl esters of the aromatic dicarboxylic acid or acids, for example, dimethylterephthalate, together with the dihydric alcohols are charged to a flask and heated to a temperature sufficient to cause condensation of the copolymer to begin, for example 175°-225°C. Thereafter the temperature is raised to about 250° to 300°C, and a vacuum is applied and the condensation reaction is allowed to proceed until substantially complete.

The condensation reaction may be facilitated by the use of a catalyst, with the choice of catalyst being determined by the nature of the reactants. The various catalysts for use herein are very well known in the art and are too numerous to mention individually. Generally, however, when an alkyl ester of the dicarboxylic acid compound is employed, an ester interchange type of catalyst is preferred, such as NaH $Ti(OC_4H_9)_6$ in n-butanol. If a free acid is being reacted with free glycols, a catalyst is generally not added until after the preliminary condensation has gotten under way.

The reaction is generally begun in the presence of an excess of glycols and initially involves heating to a temperature sufficient to cause a preliminary condensation followed by the evaporation of excess glycol. The entire reaction is conducted with agitation under an inert atmosphere. The temperature can be advantageously increased with or without the immediate application of vacuum. As the temperature is further increased, the pressure can be advantageously greatly reduced and the condensation allowed to

proceed until the desired degree of polymerization is achieved. The product can be considered finished at this stage or it can be subjected to further polymerization in the solid phase in accordance with well known techniques. Thus, the highly monomeric condensation product can be cooled, pulverized, and the powder heated to a temperature somewhat less than employed during the last stage of molten polymerization thereby avoiding coagulation of the solid particles. The solid phase polymerization is conducted until the desired degree of polymerization is achieved. The solid phase polymerization, among other things, results in a higher degree of polymerization without the accompanying degradation which frequently takes place when continuing the last stage of the melt polymerization at a temperature high enough to achieve the desired degree of polymerization. The solid phase process is advantageously conducted with agitation employing an inert atmosphere at either normal atmospheric pressure or under greatly reduced pressure.

These copolyesters will generally have an intrinsic viscosity of at least about 0.4 dl/gm as measured in 60/40 phenol/tetrachloroethane or other similar solvents at about 25°C and will have a heat distortion temperature from about 60°C to about 70°C. The relative amounts of the 1,4-cyclohexanedimethanol to ethylene glycol in the glycol portion of the copolyester (b) may vary so long as the molar ratio of 1,4-cyclohexanedimethanol to ethylene glycol is from about 1:4 to 4:1, in order to provide a polyester copolymer having a suitable heat distortion temperature within the recited range, and other suitable properties.

One quite useful type of copolyester is a copolyester of the type described hereinafore wherein the glycol portion has a predominance of ethylene glycol over 1,4-cyclohexanedimethanol, for example greater than 50/50 and especially preferably is about 70 molar ethylene glycol to 30 molar 1,4-cyclohexanedimethanol, and the acid portion is terephthalic acid. A preferred copolyester of this type is commercially available under the tradename KODAR PETG 6763 from Eastman Chemical Co. A Preferred copolyester is one derived from 1,4-cyclohexanedimethanol as the glycol portion and a mixture of isophthalic and terephthalic acids as the acid portion. This type of copolyester is available from Eastman Chemical Co. under the tradename KODAR A150.

The ratios of the polyesters to the polycarbonates in the instant compositions may vary widely. Generally, however, compositions which contain from about 5 to about 95 weight % polycarbonate and from about 95 to about 5 weight % polyester are preferred, while compositions containing from about 20 to about 80 weight % polycarbonate and from about 80 to about 20 weight % polyester are more preferred Weight % polycarbonate is based on the total amounts of polycarbonate and polyester resins present in the compositions.

The polyols which are admixed with the polycarbonate and polyester, and which function as color stabilizers in those blends exhibiting yellowing, are well known compounds which are amply described in the literature and are generally commercially available or may be prepared by known methods.

They may be represented by the general formula

IV. $R^4\text{-}(OH)_r$

wherein:

$R^4$ is an aliphatic hydrocarbon moiety, a substituted aliphatic hydrocarbon moiety, an aliphatic-aromatic hydrocarbon moiety, or a substituted aliphatic-aromatic hydrocarbon moiety, preferably containing from 2 to about 20 carbon atoms, with the proviso that when $R^4$ is an aliphatic-aromatic or substituted aliphatic-aromatic hydrocarbon moiety the hydroxyl groups are bonded only to the aliphatic portion of said moiety; and

r is a positive integer having a value of from 2 up to the number of replaceable hydrogen atoms present on $R^4$, preferably having a value of from 2 to about 8.

The aliphatic hydrocarbon moieties represented by $R^4$ include the acylic aliphatics and the cycloaliphatics. The acylic aliphatic moieties are preferably those containing from 2 to about 20 carbon atoms in either a straight chain or branched chain. The cyclic aliphatic moieties are preferably those containing from 4 to about 8 ring carbon atoms. These cyclic aliphatic moieties may contain alkyl substituent groups on the ring carbon atoms, and the hydroxyl groups may be bonded to either the ring carbon atoms or to the alkyl substituent groups, or to both.

The aliphatic-aromatic hydrocarbon moieties represented by $R^4$ are those containing an aromatic portion which preferably contains from 6 to 12 ring carbon atoms, i.e., phenyl, naphthyl, and biphenyl, and an aliphatic portion bonded to the ring carbon atoms of the aromatic portion, with the hydroxyl groups being present only the the aliphatic portion. It is to be understood that only one aliphatic portion may be bonded to the aromatic portion, or two or more aliphatic portions may be bonded to the aromatic portion. If more than one aliphatic portion is bonded to the aromatic portion of the aliphatic-aromatic moiety the hydroxyl groups may be present on different aliphatic portions.

The substituted aliphatic and substituted aliphatic-aromatic moieties represented by $R^4$ are those which

contain substituent hroups on the hydrocarbon moieties, preferably from 1 to about 4 substituent groups. The preferred substituent groups are the halogens, preferably chlorine and bromine, amino, and nitro groups. When more than one substituent group is present they may be the same or different.

Preferred polyols of Formula IV are the acylic aliphatic polyhydric alkanols, with the hexahydric alkanols being preferred. Preferred polyols of this type are those wherein the hydroxyl groups are bonded to different carbon atoms of the acylic aliphatic hydrocarbon moiety.

Some illustrative non-limiting examples of polyols represented by Formula IV include cyclohexane dimethanol, butanediol, mannitol, sorbitol, 1,3-propanediol, glycerol, 1,2-cyclopentanediol, inositol, 1,3,5-cylcohexanetriol, 1,2,3,4,5-pentahydroxypentane, and 1,1,2,2-tetrahydroxyethane.

The amount of polyol present in the instant compositions is a minor amount, based on the total amounts of polycarbonate, polyester and polyol present, with the polycarbonate and the polyester being present as the major portions of the instant compositions. Generally, the amount of polyol present is from about 0.01 to about 5 weight percent, preferably from about 0.05 to aboyr 2 weight percnt. Weight percent of polyol is based on the total amounts of polycarbonate, polyester, and polyol present in the instant compositions.

In these polycarbonate/polyester compositions which exhibit yellowing or discoloration the amount of polyol present is an antiyellowing effective amount. By antiyellowing effective amount is meant an amount effective to stabilize the color of the polycarbonate/polyester compositions, i.e., an amount effective to inhibit or reduce yellowing of these blends. Generally, this amount is at least about 0.01 weight percent, preferably at least about 0.05 weight percent. Weight percent of color stabilizer is based on the total amounts of color stabilizer and polycarbonate/polyester resin blend present in the composition. The upper limit of the amount of color stabilizer present is such that it is insufficient to substantially deleteriously affect, to a substantial degree, substantially most of the advantageous properties of the polycarbonate/polyester blends. Generally, this amount should not exceed about 5 weight percent, preferably about 2 weight percent, and more preferably about 1 weight percent.

The compositions of the instant invention may be prepared by well known and conventional methods, for example by first preparing the blends of the polycarbonate and polyester resins and thereafter thoroughly mixing with said blends the desired amount of said polyol.

It is to be understood that mixtures of two or more different polyols, as well as individual polyols, can be used as the color stabilizer.

The compositions of the instant invention may optionally contain the commonly known and used additives such as, for example: antioxidants; mold release agents; fillers such as glass, talc, mica, and clay; ultraviolet radiation stabilizers such as the benzophenone, benzotriazoles, and cyanoacrylates; conventional color stabilizers such as the organophosphites; and flame retardants. Some particularly useful flame retardants are the alkali and alkaline earth metals salts of organic sulfonic acids. These types of flame retardants are described, inter alia, in U.S. Patent Nos. 3,933,734; 3,931,100; 3,978,024; 3,948,851; 3,926,908; 3,919,167; 3,909,490; 3,853,396; 3,853,399; 3,917,559; 3,951,910 and 3,940,366, all of which are incorporated herein by reference.

## DESCRIPTION OF THE PREFERRED EMBODIMENT

The following examples are set forth to further illustrate the present invention and are not to be construed as limiting the invention thereto. Unless otherwise specified, all parts and percentages are on a weight basis.

The following examples illustrate compositions falling outside the scope of the instant invention. They are presented for comparative purposes only.

### EXAMPLE 1

A blend containing 50 parts by weight of an aromatic polycarbonate resin derived from bisphenol-A and phosgene and 50 parts by weight of a copolyester (KODAR A150) was extruded on a Sterling single screw extruder (1 3/4") at a melt temperature of about 525°F. The extrudate was injection molded into test plaques 1/8" thick on a Van Dorn machine. The Yellowness Index (YI) of the test plaques was measured on a Gardner Colorimieter in accordance with test method ASTM D1925. The results are set forth in Table I.

EXAMPLE 2

The procedure of Example 1 was repeated except that different batches of the same type of polycar bonate and copolyester were used to prepare the blends. The results of the YI determination are set forth in Table II.

The following examples illustrate compositions of the present invention.

EXAMPLE 3

The procedure of Example 1 was substantially repeated except that 0.15 parts by weight per hundred parts by weight of the resin blend of mannitol was added to the resin blend. The YI was determined as in Example 1 and the results are set forth in Table I.

EXAMPLE 4

The procedure of Example 2 was substantially repeated except that 0.07 parts by weight per hundred parts by weight of the resin blend of butanediol was added to the resin blend of Example 2. The YI was determined and the results are set forth in Table II.

EXAMPLE 5

The procedure of Example 2 was substantially repeated except that 0.15 parts by weight per hundred parts by weight of the resin blend of inositol was added to the resin blend of Example 2. The YI was determined and the results are set forth in Table II.

TABLE II

| Example No. | YI |
|---|---|
| 1 | 67.2 |
| 3 | 5.9 |

TABLE II

| Example No. | YI |
|---|---|
| 2 | 73 |
| 4 | 67 |
| 5 | 63 |

As illustrated by the data in Tables I and II the compositions of the instant invention (Examples 3-5) exhibit a lower YI, i.e., less yellowing, than neat blends of polycarbonate and polyester resins (Examples 1 and 2). This clearly illustrates that the polyols of the present invention are effective in reducing the yellowing of those polycarbonate/polyester resin blends which tend to yellow.

The compositions of the instant invention are useful in the production of shaped arrticles, e.g., extruded and molded articles, exhibiting reduced yellowing.

The polyols of the instant invention can also be advantageously added to or admixed with those polycarbonate/polyester resin blends where discoloration or yellowing is not a significant problem, since the polyols of the present invention, in addition to reducing yellowing in those blends which tend to yellow, also inhibit or reduce transesterification in polycarbonate/polyester resin blends which are subject to transesterification. In such cases these compositions contain from about 0.01 to about 5 weight percent of said polyol, preferably from about 0.05 to about 2 weight percent, more preferably from about 0.1 to 1.0 weight

percent. Weight percent polyol is based on the total amounts of polyol, polycarbonate, and polyester present in the instant compositions.

Obviously, other modifications and variations of the present invention are possible in light of the above teachings. It is, therefore, to be understood that changes may be made in the particular embodiments of the invention described which are within the full intended scope of the invention as defined by the appended claims.

## Claims

1. A resinous composition comprising:
   (i) at least one aromatic polycarbonate resin;
   (ii) at least one polyester resin; and
   (iii) a minor amount of at least one polyol.

2. The composition of claim 1 wherein said minor amount of said polyol is from about 0.01 to about 5 weight percent, based on the total amounts of (i)-(iii) present.

3. The composition of claim 2 wherein said minor amount of said polyol is from about 0.05 to about 2 weight percent.

4. The composition of claim 1 wherein said amount of polyol is an antiyellowing effective amount.

5. The composition of claim 4 wherein said antiyellowing effective amount is at least about 0.01 weight percent, based on the total amounts of (i)-(iii) present.

6. The composition of claim 5 wherein said antiyellowing effective amount is at least about 0.05 weight percent.

7. The composition of claim 1 wherein said polyol is represented by the formula

$R^4$-$(OH)_r$

wherein:

$R^4$ is selected from aliphatic hydrocarbon moieties, substituted aliphatic hydrocarbon moieties, aliphatic-aromatic hydrocarbon moieties, or substituted aliphatic-aromatic hydrocarbon moieties, with the proviso that if $R^4$ is an aliphatic-aromatic or substituted aliphatic-aromatic moiety the hydroxy groups are bonded only to the aliphatic portion thereof; and

r is a positive integer having a value of from 2 up to the number of replaceable hydrogen atoms present on $R^4$.

8. The composition of claim 7 wherein $R^4$ contains form 2 to about 20 carbon atoms.

9. The composition of claim 8 wherein r has a value of from 2 to about 8.

10. The composition of claim 8 wherein $R^4$ is an acylic aliphatic hydrocarbon moiety.

11. The composition of claim 10 wherein said polyol is a hexahydric alkanol.

12. The composition of claim 11 wherein said polyol is mannitol, inositol, or mixtures thereof.

13. The composition of claim 10 wherein said polyol is butanediol.

14. The composition of claim 1 wherein said polyester is a poly(alkylene terephthalate).

15. The composition of claim 14 wherein said poly(alkylene terephthalate) is poly(butylene terephthalate).

16. The composition of claim 1 wherein said polyester is comprised of the reaction products of a glycol portion containing 1,4-cyclohexane dimethanol, ethylene glycol, or mixtures thereof; and an acid portion containing isophthalic acid, terephthalic acid, or mixtures thereof.

17. The composition of claim 1 wherein said aromatic polycarbonate resin is comprised of the reaction products of at least one dihydric phenol and a carbonate precursor.

18. The composition of claim 17 wherein said carbonate precursor is phosgene.

19. The composition of claim 18 wherein said dihydric phenol is bisphenol-A.

20. The composition of claim 19 which contains a flame retardant amount of at least one flame retardant compound.

21. The composition of claim 20 wherein said flame retardant compound is selected from the alkali or alkaline earth metal salts of organic sulfonic acids.